Europäisches Patentamt

European Patent Office

Office européen des brevets

(11) Veröffentlichungsnummer: **0 079 296**

A2

# EUROPÄISCHE PATENTANMELDUNG

(21) Anmeldenummer: 82810290.5

(22) Anmeldetag: 08.07.82

(51) Int. Cl.³: **B 60 S 1/48**

(30) Priorität: 10.11.81 CH 7191/81

(43) Veröffentlichungstag der Anmeldung:
18.05.83 Patentblatt 83 20

(84) Benannte Vertragsstaaten:
AT DE FR GB IT

(71) Anmelder: von Buddenbrock, Jobst
Bahnhofstrasse 12
CH-6362 Stansstad(CH)

(72) Erfinder: von Buddenbrock, Jobst
Bahnhofstrasse 12
CH-6362 Stansstad(CH)

(54) Durchlauferhitzer für Scheibenwaschanlagen bei Autos.

(57) Das Gerät besteht aus einem Behälter (1) welcher die Form eines geöffneten Hohlzylinders besitzt und am Kühlerschlauch (5) eines Autos befestigt wird.

Der Behälter (1) welcher als Durchlauferhitzer dient, wird zwischen dem Gefäss des Scheibenwaschwasser und den Spritzdüsen angeschlossen. Durch die Form und Elastizität des Behälters (1) wird eine gute Anpassung am Kühlerschlauch (5) erziehlt und eine gute Wärmeübertragung vom Kühlerschlauch (5) auf den mit Wasser gefüllten Behälter (1) gewährleistet, ohne einen Eingriff am Kühlerschlauch (5) vornehmen zu müssen. Bei Betätigung der Scheibenwaschanlage durch Handhebel oder Fusspedal im Auto wird das erwärmte Wasser auf die Windschutzscheibe gedrückt und mit dem Wischer verteilt.

Fig.3

Die vorliegende Erfindung bezieht sich auf einen Durchlauferhitzer für Scheibenwaschanlagen bei Autos.

Bei Autos mit Wasserkühlung zirkuliert das heisse Wasser
mittels eines Schlauches (Kühlerschlauch genannt) vom Motor zum Kühlersystem. Bis anhin wurde bei Durchlauferhitzer
für Scheibenwaschanlagen ein Metallbehälter am Kühlerschlauch
so angebracht, dass ein Stück des Kühlerschlauches herausgeschnitten werden musste um den Metallbehälter einsetzen
zu können.

Zur Behebung dieses Eingriffes am Kühlerschlauch ist der
erfindungsgemässe Behälter entwickelt worden.

Die entstehende Wärme auf der Aussenseite des Kühlerschlauches
wurde bis anhin nicht genutzt. Durch aufsetzen eines Behälters 1 auf dem Kühlerschlauch 5 kann diese Wärme genutzt
werden. Das kalte Wasser der Scheibenwaschanlage, welches
von einem Gefäss mittels Pumpe durch ein Plastikschläuchen
zu den Spritzdüsen führt, wird durch einen geformten Hohlkörper wie Behälter 1 dazwischengekoppelt und auf dem Kühlerschlauch aufgesetzt. Das im Behälter 1 befindliche Wasser
wird somit erwärmt.

Bei Betätigung der Scheibenwaschanlage durch Handhebel oder
Fusspedal im Auto wird das im Behälter 1 erwärmte Wasser
auf die Windschutzscheibe gedrückt und mit dem Wischer verteilt.

Warmes Wasser wäscht besser und gibt eine bessere Sicht
beim Autofahren. Im folgenden ist anhand der Zeichnung
eine beispielweise Ausführungsform des Erfindungsgegenstandes erläutert. Es zeigen:

Fig. 1 eine Seitenansicht des Behälters, in Richtung des
in Fig. 2 eingezeichneten Pfeiles I gesehen.

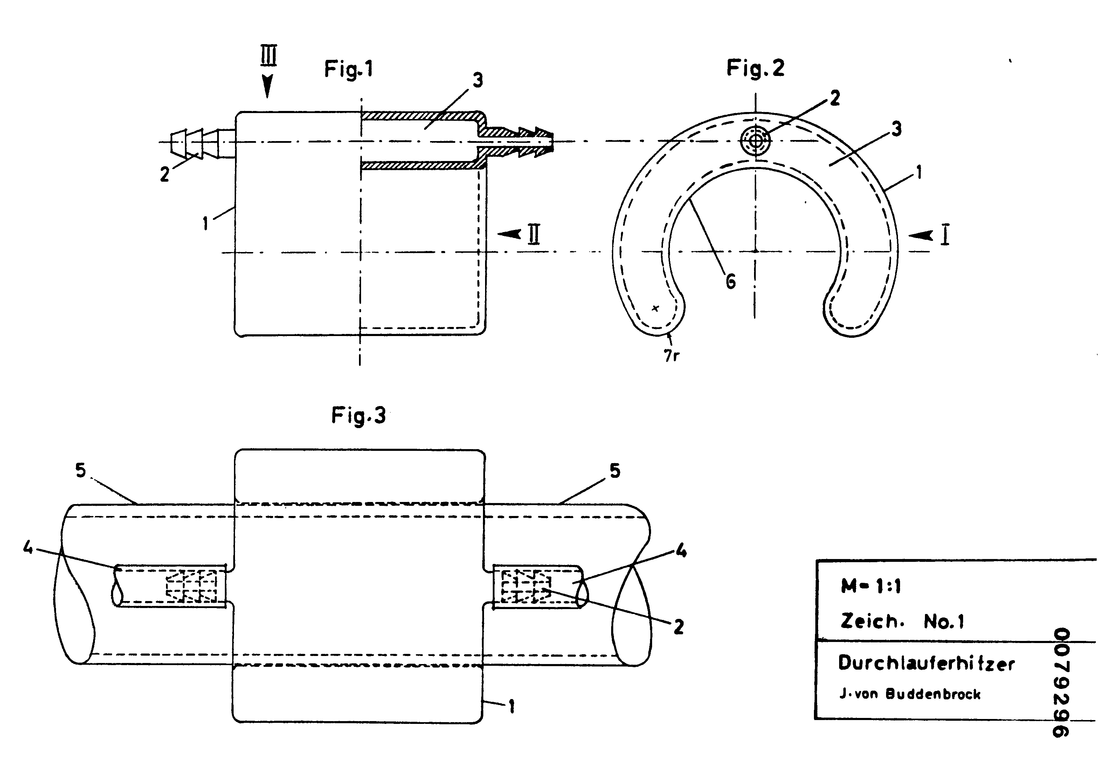

Fig. 2 ein Schnitt des Behälters, in Richtung des in Fig.1
eingezeichneten Pfeiles II gesehen.

Fig. 3 eine Draufsicht des Behälters in Richtung des in Fig. 1
eingezeichneten Pfeiles III gesehen, weiters ist schematisch
dargestellt wie die Anbringung am Kühlerschlauch 5 und die
Plastikschläuchen 4 an den beiden Anschlusstutzen 2 aufgesteckt werden.

Ansprüche

1. Durchlauferhitzer für Scheibenwaschanlagen bei Autos, gekennzeichnet durch einen Behälter (1) welcher der Form entspricht diesen am Kühlerschlauch befestigen zu können um eine indirekte Wärmeaufnahme vom Kühlerschlauch (5) zu erhalten.

2. Gerät nach Patentanspruch 1, dadurch gekennzeichnet, dass der Behälter (1) die Form eines geöffneten Hohlzylinders (3) besitzt.

3. Gerät nach Patentanspruch 1, dadurch gekennzeichnet, dass der Behälter (1) elastisch ist.

4. Gerät nach Patentanspruch 1, dadurch gekennzeichnet, dass der Behälter (1) wärme- und kältebeständig ist.

5. Gerät nach Patentanspruch 1, dadurch gekennzeichnet, dass der Behälter (1) fest auf dem Kühlerschlauch (5) aufgespannt wird um eine gute Kontaktfläche(6) zu bewirken.

6. Gerät nach Patentanspruch 1, dadurch gekennzeichnet, dass der Behälter (1) eine Grösse besitzt um bei gekrümten als auch bei kurzen Kühlerschläuchen eine Anbringung zu ermöglichen.

0079296

M–1:1
Zeich. No.1
Durchlauferhitzer
J. von Buddenbrock

Fig.2

Fig.1

Fig.3